# EUROPEAN PATENT SPECIFICATION

(11) **EP 1 488 690 B1**
(45) Date of publication and mention of the grant of the patent: **27.03.2013**
(21) Application number: 04253613.6
(22) Date of filing: 17.06.2004
(51) Int. Cl.: A01K 1/01

(54) **Animal litter and animal litter box using the same**
Streuboden für Haustiere
Boite de litiere pour animaux domestiques

(30) Priority: 20.06.2003 JP 2003177390
(43) Date of publication of application: 22.12.2004
(73) Proprietor: Uni-Charm Corporation, Ehime (JP)
(72) Inventor: Matsuo, Takayuki, Shinagawa-ku, Tokyo 141-0031 (JP); Ikegami, Takeshi, Shinagawa-ku, Tokyo 141-0031 (JP)
(74) Representative: Eke, Philippa Dianne

(56) References cited:
- EP-A1- 1 319 332
- WO-A-02/056673
- JP-A- 9 271 283
- JP-A- 10 229 768
- US-A- 4 085 704
- US-A- 5 970 915

## Description

### BACKGROUND OF THE INVENTION

### Field of the Invention

The present invention relates to an animal litter for a litter box for animals such as cats and dogs.

### Background of the Invention

A plastic container in which grains called animal litter are contained has been used as an animal litter box for animals such as cats or dogs kept in rooms. The animal litter absorbs animal excrements such as urine evacuated from animals. An owner removes the animal litter with urine or feces from the container along with feces, and replenishes new animal litters in accordance with an amount of the animal litters removed.

However, pet animals like cats have the habit of mixing animal litters with their paws after evacuation. Therefore, not only animal litters but also urine or feces are sometimes attached to their paws. In addition to this, it is difficult to completely remove only the soiled animal litters, because the soiled animal litters are scattered.

Animal litters used for the litter box like this have been derived from such as absorbents like minerals such as zeolite and river sand, bentonite that solidifies when it absorbs liquid, and cellulose made of crushed pulp which is hardened and shaped into grains.

However, zeolite and river sand do not absorb urine, and bentonite and pulp do not have high absorptive capacity and can not remove odors. Furthermore, animal excrements, particularly cats' excrements, have offensive odors, so that the odors are drifted in the entire room where an animal litter box is placed and it is unpleasant to clean them up.

An animal litter made of porous water-resistant silica gel having strong deodorizing and absorbing abilities has been offered to solve this problem (JP Patent No. 2766632, for example). Another animal litter made of water-shedding material, which is used in combination with a liquid-absorbing sheet absorbing liquid such as urine to suppress the occurrence of odors has been offered (Japanese unexaminedpatenpublication 10-229768, for example).

However, the animal litter disclosed in the JP 09 271 283 is small grains which diameter is between 2 and 6 mm in order to absorb urine efficiently by reducing the surface area of the litter and spaces among the grains. Furthermore, the water content of the animal litter is lowered in order to increase the absorption rate and the maximum absorbable amount of liquid. The water content is adjusted to 3 percent or below by weight when it is dried at temperatures of 90 to 120°C. In this manner, the animal litter has a high absorption rate, and can absorb evacuated urine quickly. However, since silica gel and a large amount of urine absorbed in the silica gel have been left for some days in an animal litter box, the animal litter box becomes unsanitary and emits offensive odors.

The grains which are used as the animal litter disclosed in the JP-10-229768-A do not absorb urine. Therefore, urine which does not pass through the grains and is left on the surface of the grains will become rotten and gives off a foul odor. Besides, since the moisture which is contained in the feces is too small to pass through the grains, it tends to remains on the surface of the grains andgives off a foul odor. Therefore, the soiled grains of the animal litter need to be discarded every time when an animal evacuates, or the entire animal litter needs to be changed once a week or two weeks. Moreover, since not only the animal litter but also the liquid-absorbing sheet needs to be changed to new one, the amount of the waste becomes large.

### SUMMARY OF THE INVENTION

This invention has been made to solve these problems. The object of this invention is to provide an animal litter which is used for long periods in an animal litter box which has a double structure having the animal litter and a liquid-absorbing sheet, because the animal litter has a liquid passing property which enables greater part of moisture of animal excrements to move to the liquid-absorbing sheet and an absorptive capacity which enables the moisture that has not passed through the animal litter to be absorbed into the animal litter over time.

In order to solve the problems mentioned above, grains having a greater diameter and a slower absorption rate than those of the animal litters used in the prior arts are used as an animal litter in the present invention. In the present invention, the moisture of excrements which are evacuated onto the animal litter can be transferred quickly to the liquid-absorbing sheet placed under the animal litter by using grains which has a particular moisture content controlled to be rather higher than commodity type, and is shaped to be granular. Accordingly, the grains can inhibit liquid remaining on their surface, and prevent foul odors from being generated. This prolongs the period of usage of the animal litter.

More specifically, the invention is to provide the following.
(1) An animal litter box as recited by claim 1.
   According to this invention, the absorption rate of each of grains which comprise the animal litter is controlled. Therefore, liquid such as urine evacuated on the animal litter passes through spaces among the grains for a start. Then, the liquid left on the surface of the grains is absorbed into each grain over time. Therefore, moisture is hardly at all left on the surface of the grains, and a dry state is easily maintained. By contrast, the initial moisture content of the grains comprising the animal litter described in JP0 927 283 is lower than that of the grains of this invention, in order to accelerate the absorption rate and absorb all the liquid evacuated. Therefore, this prior art is greatly different from the present invention with regard to the absorption rate. Furthermore, the grains described in the JP- 10-229768-A cannot absorb liquid left on the grains because they are water-shedding. Therefore, this art is clearly different from the present invention.
The animal litter box, wherein a liquid passing ratio of a mass of said grains is 70% or more.
   Preferably, the ratio of liquid passing through the mass of the grains is more than 70%. Therefore, the liquid contained in animal excrements easily passes through the mass of the grains and can be quickly absorbed into the liquid-absorbing sheet when the grains is used in combination with the liquid-absorbing sheet. For reference, the liquid passing ratios of grains used for animal litters of prior arts are: (a) 27% in hardening typed paper grains which harden when they absorb liquid (made of pulp, super absorbent polymers and starch and, (b) 50% in non-hardening grains which do not harden when they absorb liquid (made of pulp and calcium carbonate) , and (c) 7% in water-resisting silica gel having an initial moisture content of 3% and grain sizes of 3 to 3.5 mm. Thus, it is difficult for liquid to pass through these grains quickly. Particularly, since the grain sizes are small in (c) , the void fraction of the animal litter is small and it is difficult for liquid to pass through the animal litter quickly. By contrast, the present invention is clearly different from the prior arts in that liquid can pass through the grains quickly. In addition, it is preferable that the liquid passing ratio of the mass of the grains of this invention is 80% or more.
The animal litter box, wherein a moisture content of said grain ranges from 4 to 15 percent by weight after it has been left in an atmosphere at a temperature of 25°C and a humidity of 50% for 24 hours, and a diameter of said grain ranges from 4 to 10 mm.
   Preferably, the grain has an initial moisture content of from 4 to 15 percent by weight, preferably from 5 to 10 percent by weight, which allows the moisture of animal excrements to pass quickly through the grains and also allows the moisture left on the grains to be absorbed into the grains. Thus, the surface of the grains is easily kept in a dry state, and the grains can be repeatedly used for long period. Furthermore, since the size of the grain is controlled bigger than that of the grain of prior art, which makes spaces among the grains bigger and thus makes the void fraction of the animal litter increased in the mass. Therefore, liquid can pass through the animal litter more easily. Moreover, because the size of the grain is big, the animal litter has also advantage of hard to be attached to paws. Preferably, the diameter of the grain ranges from 4 to 10 mm, more preferably from 5 to 8 mm.
The animal litter box, wherein said grain has deodorizing ability.
   Preferably, the grain is provided with deodorizing ability. Therefore, a foul odor can be suppressed even though the animal litter is used for a long time.
According to this invention, silica gel is used for the grain comprising the animal litter. Since silica gel is porous and has high ability of absorbing liquid and odors, it can shut in the moisture and the sources of odors. Therefore, the liquid of animal excrements remained on the animal litter can be absorbed and deodorized, and durability of the animal litter can be improved.
According to this invention, the animal litter box has a double structure having a litter container for containing the animal litter and a liquid-absorbing sheet holder for placing the liquid-absorbing sheet. Therefore, liquid contained in animal excrements can pass from the animal excrement evacuated onto the animal litter to the liquid-absorbing sheet quickly. 5 Furthermore, when the bottom of the litter container is set to be separated from the liquid-absorbing sheet placed in the liquid-absorbing sheet container, the liquid which has been transferred to the liquid-absorbing sheet is hardly returned again to the animal litter.

Preferably, the liquid passing property of the mass of grains which comprises the animal litter is controlled by controlling the initial moisture content of grains. More specifically, when the initial moisture content of the grains is made small, the liquid absorption by the animal litter is enhanced. On the other hand, when the moisture content of the grains is made high, prompt absorption of liquid by the grains is suppressed. Thus, moisture of animal excrements is allowed to pass through the litter quickly. In this manner, the liquid passing ratio of the mass of grains can be controlled and the dryness of the animal litter can be controlled by controlling the initial moisture content of each grain forming the animal litter, which leads to improve the comfort of the animal litter box which uses the animal litter mentioned above.

### BRIEF DESCRIPTION OF THE DRAWINGS

Figs. 1A and 1B are perspective views illustrating an embodiment of an animal litter box according to this invention; and
Fig. 2 is a partial cross-sectional view through X-X in Fig. 1A.

### DETAILED DESCRIPTION OF THE INVENTION

Hereinafter, the present invention will be described in detail.

The word 'animals' means not only pet animals like dogs, cats, rabbits, and hamsters but also cubs of large-sized animals such as tigers, lions and bears in this specification. The word 'animal litter' means a mass of grains. The shapes of the grains are spherical, subspherical, or polygonal. It is A main raw material of the grain is silica gel. 'Liquid' contains all fluid mass which is evacuated from animals and is capable of passing through the animal litter of the present invention. 'Liquid' includes moisture contained in feces of animals. The word 'liquid passing property' means a capability to let the liquid pass through a solid matter or a mass of solid matters and the word 'liquid passing ratio' means the ratio of liquid passing through to total liquid poured. The more liquid passes through grains, the higher the liquid passing property of the mass of grains becomes.

A silica gel which is shaped into balls and dried by a method mentioned hereafter can be used for the grain for the present invention. First, a raw material powder of silica gel is grinded to be uniform by a grinder. A binder is made mostly from water glass. The binder can contain other agents and water other than water glass. Then, the grinded powder silica gel is mixed with the binder and shaped into balls having a diameter of from 4 to 10 mm by a pelleting machine. Lastly, the silica gel balls are put into a dryer at temperatures of from 100 to 140°C, and dried to have an initial moisture content of from 4 to 15 percent by weight. Poly-vinyl alcohol (PVA) is preferably contained in the binder because PVA can improve the efficiency of the drying.

The absorptive property of grain made from silica gel depends on its initial moisture content. The initial moisture content of the grain made from silica gel is controlled to be 4 to 15 percent by weight, preferably from 5 to 10 percent by weight. When the initial moisture content is lower than 4 percent by weight, the absorption rate becomes fast and liquid passing property descends. The grain size of silica gel ranges from 4 to 10 mm, preferably from 5 to 9 mm, and more preferably from 6 to 8 mm. When the grain size is less than 4 mm, spaces among the grains become small and the liquid passing property of the mass of the grains descends. Furthermore, the opening area of the bottom of a litter container should be lessened to prevent the grains from being dropped. When the opening area of the bottom is lessened, it takes longer for animal excrement to reach the liquid-absorbing sheet. Consequently, it becomes difficult to keep the litter dry. On the other hand, when the grain size is above 10 mm, animals, particularly cats, dislike the animal litter and do not evacuate on it.

Hereinafter, the present invention will be described with reference to drawings.

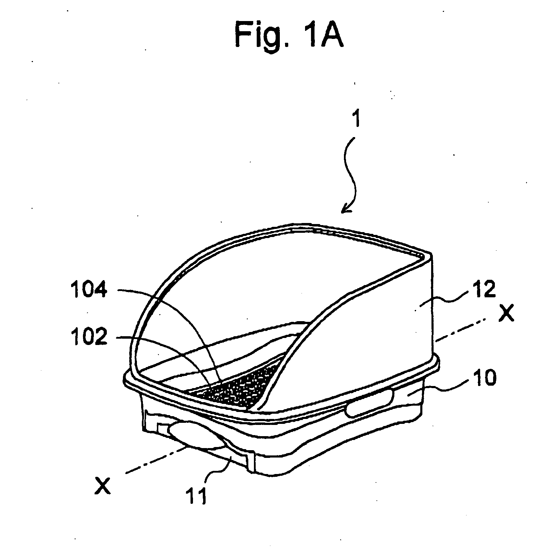

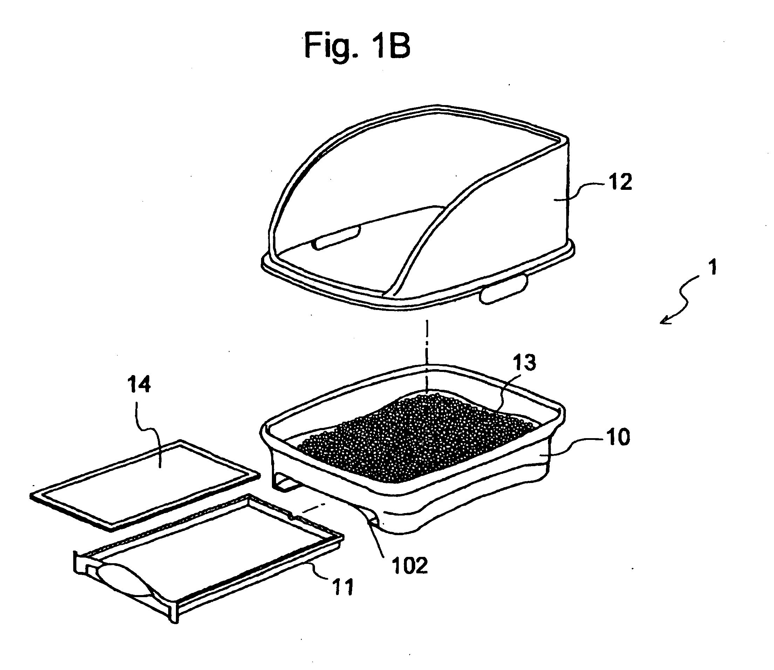

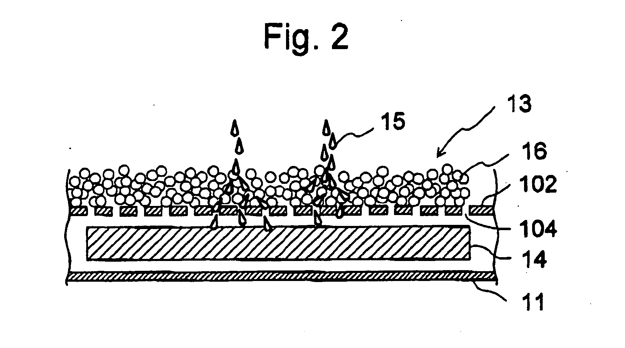

Figs. 1A and 1B are perspective views illustrating an embodiment of an animal litter box according to this invention; and Fig. 2 is a partial cross-sectional view through X-X in Fig. 1A.

As shown in Fig. 1A, an animal litter box 1 according to the present invention has a box-shaped litter container 10 for containing an animal litter 13 comprising a mass of grains 16, a liquid-absorbing sheet container 11 for placing the liquid-absorbing sheet and a side cover 12 disposed on the upper part of the litter container 10 for covering the upper side of the litter container 10 as main configurations. The liquid-absorbing sheet container 11 is placed under the litter container 10 being enable to be pulled in and out. A bottom of the litter container 102 has a plurality of holes 104. A hole 104 is preferably a polyhedron or circle, of a size that does not allow grains 16 comprising an animal litter 13 to fall through.

As shown in Fig. 1B, a predetermined amount of an animal litter 13 comprised a mass of grains 16 is placed in certain thickness on the bottom of the litter container 102. Furthermore, the liquid-absorbing sheet 14 is placed in the liquid-absorbing sheet container 11.

Fig. 2 shows a part of cross-section of the animal litter box having the animal litter 13 of the present invention and the liquid-absorbing sheet 14 places therein. When an animal has evacuated, liquid 15 first passes through the animal litter 13 and through the holes 104 of the bottom 102, and is absorbed into the liquid-absorbing sheet 14 placed in the liquid-absorbing sheet container 11. Then, the liquid 15 remaining in the animal litter 13 is absorbed into grains 16 which comprises the animal litter 13 with the passage of time.

Hereafter, the liquid absorptive ability, the absorption rate and the liquid passing property of the grains which comprises an animal litter according to the present invention is described.

### Measurement of the maximum absorbable amount of liquid (measurement example 1)

100 grams of grains made of silica gel having a different initial moisture content (ranging from 5 to 10% by weight) and diameter of from 6 to 8 mm was placed in a mesh container in which the grains did not overlap each other, and was immersed in physiological salt solution for five minutes. The container was pulled out of the solution and excess solution was removed sufficiently, and then the weight of the grains was measured. As the result, the maximum absorbable amount of solution absorbed by a grain ranged from 0.3 to 4. 0 times as much as its own weight. The moisture content of the silica gel used for the example 1 was measured after it had been left in an atmosphere at a temperature 25°C and a humidity of 50% for 24 hours. Themoisture measured ranged from 5 to 10% by weight. The moisture content of the grains was measured with the use of an infrared moisture meter made by Kett Electronic laboratory.

### Measurement of absorbable amount per 3 seconds (measurement example 2)

As with the measurement example 1, the grains made of silica gel were placed in a mesh container and immersed in physiological salt solution for three seconds. The container was pulled out of the solution and excess solution was removed sufficiently, and then the weight of the grains was measured. As the result, the amount of liquid absorbed by a grain per three seconds ranged from 20 to 70% of the maximum absorbable amount absorbed by the each grain. The amount of liquid absorbed by a grain per three seconds ranged from 0.1 to 1.5 times as much as its own weight.

### Measurement of liquid passing ratio (measurement example 3)

A container of 20 cm wide, 20 cm deep and 5 cm high, with the bottom having opening area ratio of 40% (the thickness was 5 mm, and a hole set on the bottom was 3 × 5 mm) was used for the measurement. Grains made of silica gel having a diameter of 5 to 8 mm and an initial moisture content of 5 percent by weight was placed in the container with a thickness of 25 mm. 20 ml of physiological salt solution was poured with a buret for five seconds. The amount of liquid dropped from the grains and absorbed by the liquid-absorbing sheet which was placed under the grains was measured. This was repeated five times, and the average amount of liquid was used to compute the liquid passing ratio. The liquid passing ratio of the grains was 86%.

As described above, the animal litter used for the animal litter box according to the present invention has a high liquid passing property, and the liquid remained in the animal litter can be absorbed by grains with the passage of time. Therefore, the animal litter can be easily kept dry, and the occurrence of foul odors can be prevented.

Moreover, since the animal litter according to the present invention can be used repeatedly for a long time. Thus the amount of discardedmaterials and cleaning effort become smaller, and it is economical to use the animal litter and the animal litter box as well.

## Claims

1. An animal litter box comprising:
an animal litter being comprised of grains;
a litter container having an opening for an animal going in and out, and a bottom having a liquid passing property upon which the litter is placed, and
a liquid-absorbing sheet holder which holds a liquid-absorption sheet and is placed under the bottom of said litter container,
**characterised in that** the grains are silica gel,
an amount of liquid absorbed by each of said grains per three seconds is 20 to 70% of a maximum absorbable amount of liquid absorbed by the each grain, and
the maximum absorbable amount of liquid absorbed by each of said grains is 0.3 to 4.0 times as much as its own weight.

2. The animal litter box according to claim 1, wherein a liquid passing ratio of a mass of said grains is 70% or more.

3. The animal litter box according to claim 1 or 2, wherein a moisture content of said grain ranges from 4 to 15 percent by weight after it has been left in an atmosphere at a temperature of 25°C and a humidity of 50% for 24 hours, and
a diameter of the grain ranges from 4 to 10 mm.

4. The animal litter box according to any one of claims 1 to 3, wherein said grain has deodorizing ability.

5. The animal litter box according to any of claims 1 to 4, wherein a bottom of the litter container is set to be separated from the liquid-absorbing sheet placed in the liquid-absorbing sheet holder.

6. The animal litter box according to any of claims 1 to 5, wherein a bottom of the litter container has a plurality of holes.

## Patentansprüche

1. Ein Tierklo bestehend aus:
einer Tierstreu, die sich aus Granulat zusammensetzt;
einem Streubehälter mit einer Öffnung, damit ein Tier ein- und ausgehen kann, und einem Boden, der flüssigkeitsdurchlässig ist, auf den die Streu gegeben wird, und
einem Halter für eine flüssigkeitsabsorbierende Einlage, der eine flüssigkeitsabsorbierende Einlage aufnimmt und unter den Boden des genannten Streubehälters gegeben wird,
**dadurch gekennzeichnet, dass** das Granulat Kieselgel ist,
wobei eine Flüssigkeitsmenge, die von jedem der genannten Granulatanteile pro drei Sekunden absorbiert wird, 20 bis 70% der maximale absorbierbaren Menge der durch jeden Granulatanteil absorbierten Flüssigkeit ausmacht, und
die maximal absorbierbare Menge der von jedem Granulatanteil absorbierten Flüssigkeit 0,3- bis 4,0-mal so viel wie sein Eigengewicht beträgt.

2. Das Tierklo entsprechend Anspruch 1, wobei ein Flüssigkeitsdurchlassverhältnis einer Masse des genannten Granulats 70% oder mehr beträgt.

3. Das Tierklo entsprechend Anspruch 1 oder 2, wobei der Feuchtigkeitsgehalt des genannten Granulats von 4 bis 15 Gewichtsprozent ausmacht, nachdem es der Atmosphäre 24 Stunden lang bei einer Temperatur von 25°C und einer Feuchtigkeit von 50% ausgesetzt wurde, und
ein Durchmesser des Granulats von 4 bis 10 mm beträgt.

4. Das Tierklo entsprechend einem der Ansprüche 1 bis 3, wobei das genannte Granulat eine deodorierende Wirkung hat.

5. Das Tierklo entsprechend einem der Ansprüche 1 bis 4, wobei ein Boden des Streubehälters von der flüssigkeitsabsorbierenden Einlage, die in den flüssigkeitsabsorbierenden Halter gegeben wird, getrennt werden kann.

6. Das Tierklo entsprechend einem der Ansprüche 1 bis 5, wobei der Boden des Streubehälters eine Reihe von Löchern aufweist.

## Revendications

1. Bac à litière pour animal domestique comportant :
une litière pour animal domestique constituée de grains ;
un contenant pour litière ayant une ouverture permettant à un animal domestique d'entrer et de sortir, et un fond ayant pour propriété de faire passer les liquides et sur lequel la litière est placée, et
un support pour feuille absorbant les liquides qui contient une feuille absorbant les liquides et qui est placé sous le fond dudit contenant pour litière,
**caractérisé en ce que** les grains sont du gel de silice,
une quantité de liquide absorbée par chacun desdits grains par trois secondes représente de 20 à 70 % d'une quantité de liquide absorbable maximale absorbée par ledit chaque grain, et
la quantité de liquide absorbable maximale absorbée par chacun desdits grains représente de 0,3 à 4,0 fois son propre poids.

2. Bac à litière pour animal domestique selon la revendication 1, dans lequel un rapport de passage de liquide d'une masse desdits grains est de 70 % ou plus.

3. Bac à litière pour animal domestique selon la revendication 1 ou la revendication 2, dans lequel une teneur en humidité dudit grain va de 4 à 15 pourcent en poids après avoir été laissé dans une atmosphère à une température de 25°C et une humidité de 50 % pendant 24 heures, et
un diamètre du grain va de 4 à 10 mm.

4. Bac à litière pour animal domestique selon l'une quelconque des revendications 1 à 3, dans lequel ledit grain a une capacité de désodorisation.

5. Bac à litière pour animal domestique selon l'une quelconque des revendications 1 à 4, dans lequel un fond du contenant pour litière est disposé pour être séparé de la feuille absorbant les liquides placée dans le support pour feuille absorbant les liquides.

6. Bac à litière pour animal domestique selon l'une quelconque des revendications 1 à 5, dans lequel un fond du contenant pour litière a une pluralité de trous.
